# EUROPEAN PATENT SPECIFICATION

(11) **EP 0 743 889 B1**
(45) Date of publication and mention of the grant of the patent: **07.01.1998**
(21) Application number: 95909653.8
(22) Date of filing: 06.02.1995
(51) Int. Cl.: B24B 27/06

(54) **APPARATUS FOR CUTTING OFF MATERIALOGRAPHIC SAMPLES FROM A SPECIMEN**
VORRICHTUNG ZUM SCHNEIDEN VON MATERIALPROBEN VON EINEM PROBENKÖRPER
APPAREIL SERVANT A DETACHER D'UN SPECIMEN DES ECHANTILLONS DE MATERIAUX A ANALYSER

(30) Priority: 07.02.1994 DK 16094
(43) Date of publication of application: 27.11.1996
(73) Proprietor: STRUERS A/S, DK-2610 Rodovre (DK)
(72) Inventor: HANSEN, Jens, Frimann, DK-2000 Frederiksberg (DK); JORGENSEN, Gert, DK-2860 Soborg (DK)
(74) Representative: Kyed, Iver
(86) International application number: DK9500054
(87) International publication number: WO9521043

(56) References cited:
- GB-A- 916 849
- GB-A- 1 394 707
- GB-A- 2 203 972
- US-A- 3 467 075
- US-A- 4 424 649
- US-A- 4 903 437

## Description

In the materialographic analysis of the microstructure of a material it is frequently necessary to cut off a small portion, the sample, from a large specimen. The cut-off sample must be suitable for treatment in a conventional grinding/polishing machine, in which the surface formed by the cutting operation is pressed against a rotating grinding/polishing disc, usually in a plurality of steps with grinding/polishing cover sheets of increasing fineness placed on the surface of the grinding/polishing disc.

Materialographic analysis is used for numerous materials of widely varying character, i.a. metals (metallography), ceramic materials, composite materials, bones, etc..

For cutting off materialographic samples from a specimen apparatus are known comprising a rotating abrasive cutting wheel and feeding means for advancing the abrasive cutting wheel relative to the specimen, or vice versa. An abrasive cutting wheel normally consists of grinding grains in a binder and can typically have a thickness of 0.3-3 mm. When the abrasive cutting wheel and the specimen are advanced towards one another, it cuts its way through the specimen at a certain force, the feeding force, and a feeding speed adapted thereto.

It is of great importance that the cutting of a materialographic sample should take place as gently as possible, so that the structure of the material in the surface of the cut-off sample is maintained as far as possible intact. For this reason a cooling liquid is always applied during cutting (wet cutting). The better the condition of gentleness is fulfilled, the faster and simpler can the subsequent treatment in a grinding/polishing machine be completed.

It is likewise important that the abrasive cutting wheel should not at any time be overstrained, whereby it can be damaged and possibly distorted.

The most gentle cutting can often be obtained by intermittent feed, i.e. the cutting operation is interrupted during short time intervals, whereby a small interspace is formed between the cut surface of the specimen and the cutting edge of the abrasive cutting wheel. Thereby an opportunity is established that metal particles, that may have stuck to the abrasive cutting wheel and impede the cutting, and any blunt grinding grains may be knocked off by virtue of the instantaneously increased cutting pressure created in the cutting area by the inertia when the abrasive cutting wheel is re-engaged. Besides the cooling of the cutting area by the cooling liquid will be improved when the interspace is formed. The said metal particles and blunt grinding grains in the cutting edge of the abrasive cutting wheel will produce an increased development of heat in the cutting area and should therefore, as far as possible, be avoided.

US-A-4903437 describes a slicing machine comprising a servo-motor for moving a feedtable on which a semiconductor material to be cut is mounted relative to a cutting blade. The movement is effected in a direction perpendicular to the plane of the cutting blade and is designed so as to obtain specimens of a predetermined thickness.

In the known apparatus of the kind in question, the feeding is effected hydro-pneumatically, hydraulically or by means of an electric motor with a gear. An example of hydro-pneumatic feeding is known from GB-A-2203972, where the feeding force can be varied by adjustment of the input air pressure, and the feeding speed can be varied by choking of the oil flowing in the system during feeding.

In the use of the known apparatus it is difficult to obtain certainty that the sample and/or the abrasive cutting wheel are not subjected to injury by errors in handling, or that the operator, out of cautiousness, selects a lower feeding speed than required, and thereby reduces the productivity.

It is the object of the invention to construct an apparatus of the kind in question in such a manner as to avoid these drawbacks. This object is achieved by an apparatus according to claim 1. The distinguishing feature of the invention is that the feeding means for advancing the cutting wheel in a direction (Y-direction) parallel to said wheel comprise a stepmotor to which current pulses are supplied from an associated stepmotor driver.

Such a stepmotor has the property that at a given current value of the pulses supplied to it from the stepmotor driver it stalls if it is loaded with a torque exceeding a certain limit value, but, upon missing one or more steps, is re-started if and when the loading torque drops below the limit value.

In an apparatus according to the invention the loading torque represents the feeding force, and the pulse frequency represents the feeding speed. If the feeding speed is selected so high that the feeding force rises to a permissible limit value, which does not yet result in risk of injury to the sample and/or the abrasive cutting wheel, the feeding is stopped until the feeding force has again dropped to below the limit value.

It is therefore free of risk tentatively to start out with a relative high value of the feeding speed and then to re-adjust for approaching an optimum value, which can then be used as tentative value for similar jobs.

Further features of the invention will be apparent from the following description with reference to the drawing, in which
- Fig. 1: is a schematic side view of a first embodiment of an apparatus according to the invention,
- Fig. 2: is a top view of same,
- Fig. 3: is a schematic side view of a second embodiment of an apparatus according to the invention, partly in section,
- Fig. 4: is a top view of same,
- Fig. 5: is an electric diagram for the two embodiments of Figs. 1,2 and 3,4,
- Fig. 6: is a schematic side view of a third embodiment of an apparatus according to the invention, partly in section,
- Fig. 7: is a top view of same,
- Fig. 8: is an electric diagram for the embodiment of Fig. 7,
- Fig. 9: is a schematic side view of a fourth embodiment of an apparatus according to the invention,
- Fig. 10: is a top view of same, and
- Fig. 11: is an electric diagram for the embodiment of Figs. 9,10.

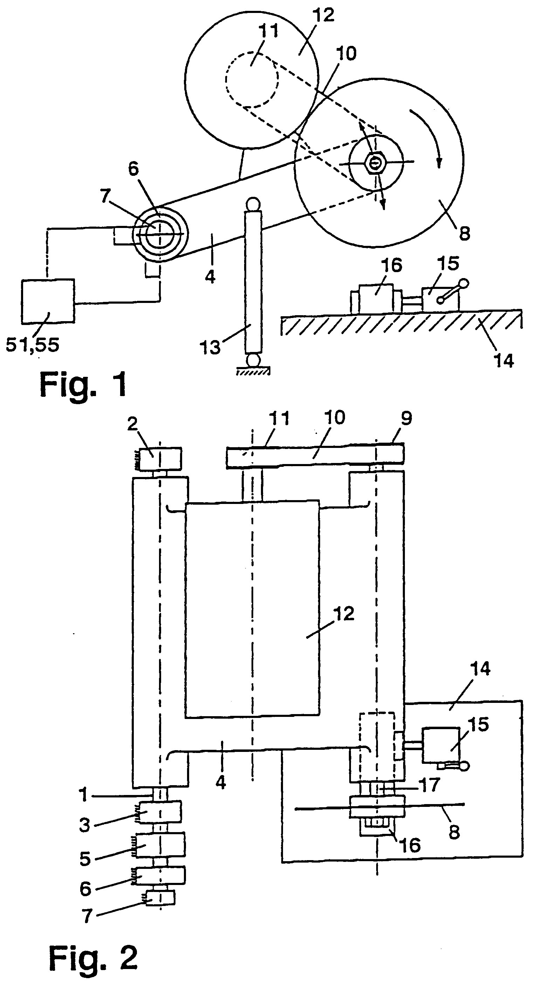

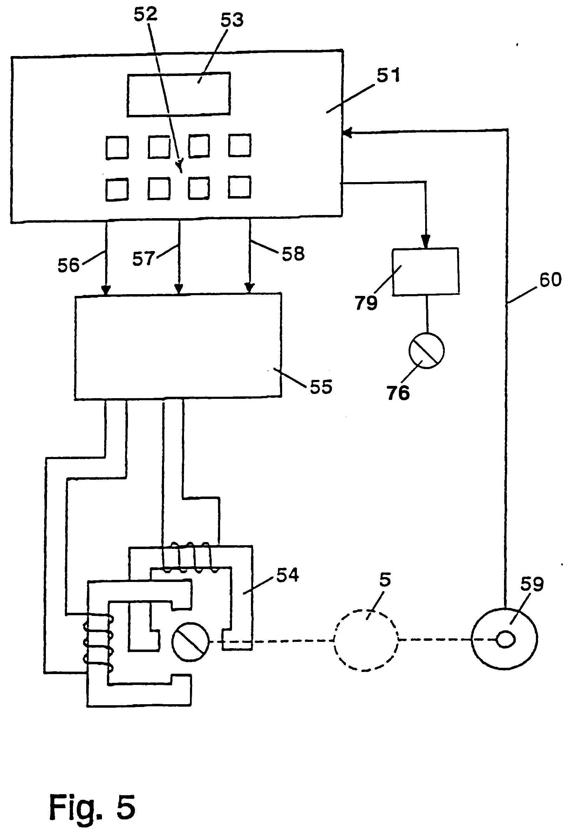

In the embodiment of Figs. 1 and 2, 1 is a shaft which is rotatably mounted in bearings 2 and 3 and carries a flat arm 4. The shaft 1 is coupled to a stepmotor 6 through a gearbox 5. The stepmotor 6 is, in well known manner, driven for stepwise rotation by current pulses from a stepmotor driver 55, which is again controlled by an electronic data processor 51, as described below with reference to fig. 5. Connected to the stepmotor 6 is an encoder 7, the function of which will likewise be described with reference to Fig. 5.

A shaft 17 is rotatably mounted at the free end of the arm 4 and carries an abrasive cutting wheel 8. The shaft 17 is driven through a wedge section belt drive 9,10,11 from a motor 12, the cutting motor, which is mounted on top of the arm 4. The weight of the arm 4 and the motor 12 is outbalanced by means of a gas spring 13.

14 is a stationary table on which a vice 15 is mounted. A specimen 16, from which a sample is to be cut off by means of the abrasive cutting wheel 8, is shown to be clamped in the vice 15.

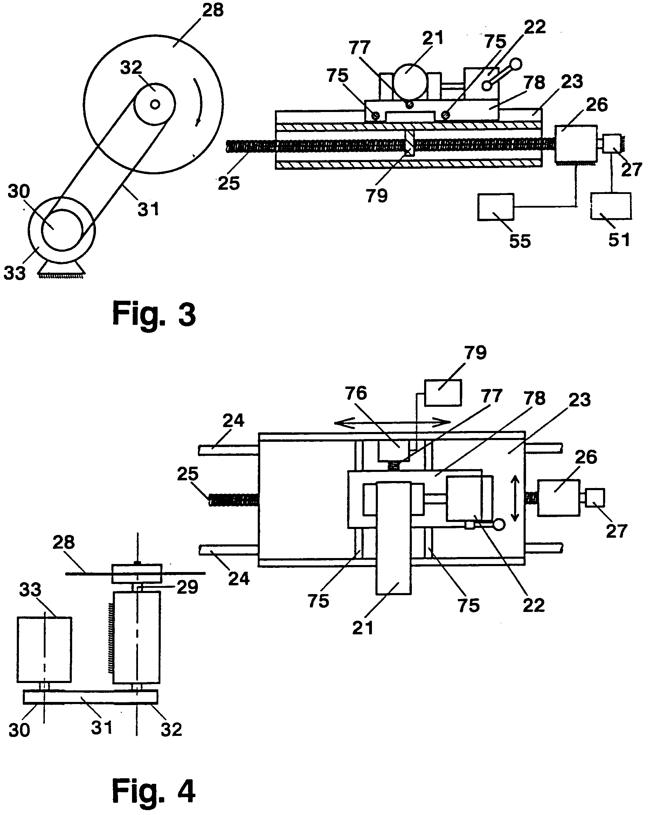

In the embodiment of Fig. 3 and 4, 23 is a table which is slidably suspended in two guides 24 and can be displaced on these by means of a helical spindle 25 engaging a nut 79, which is fixedly connected with the table 23. The helical spindle 25 is driven by a stepmotor 26 with associated stepmotor driver 55. An encoder 27 corresponding to the encoder 7 in Fig. 2 is coupled to the stepmotor 26.

A transverse table 78 is provided on top of the table 23 and is guided for displacement transversely of the table 23 by means of two guides 75. The transverse movement is established by means of a helical spindle 77 engaging a screw thread in the transverse table and driven by a stepmotor 76 with associated stepmotor driver 79. The transverse table 78 carries a vice 22, in which a specimen 21 is shown to be clamped.

28 is an abrasive cutting wheel fixedly mounted on a shaft 29 which is rotatably mounted in stationary bearings, not shown, and is driven through a wedge section belt drive 30,31,32 from a cutting motor 33.

In this embodiment the specimen 21 is thus movable relative to the cutting wheel 28 in two directions perpendicular to one another, viz. in the feeding direction parallel to the cutting wheel 28, in the following referred to as the Y-direction, and in the transverse direction perpendicularly to the cutting wheel, in the following referred to as the X-direction.

During a cutting operation the stepmotor 76 is immmobilized in the position to which it has latest been moved, as described below. The cutting operation is therefore equivalent for this embodiment and that of Fig. 1 and 2, and will in the following be explained in detail with reference to Fig. 5.

In the diagram of Fig. 5, 51 is an electronic data processor serving to adjust, co-ordinate and display the parameters of the cutting operation, partly by direct key entry, partly by calling a program stored in the processor 51, as mentioned below. The processor 51 has a keyboard 52 and a display 53. 54 represents the stepmotor 6 and 26 shown in Figs. 1,2 and 3,4, respectively. 55 is a stepmotor driver for the stepmotor 54. The processor 51 is connected with the stepmotor driver 55 through output signal conductors 56 for pulse frequency, 57 for current value of the pulses, and 58 for direction of rotation of the stepmotor, and with an encoder 59, representing the encoder 7 and 27 of Figs. 1,2 and 3,4, respectively, through an input signal conductor 60 for position. The encoder 59 is shown by dotted lines to be coupled to the gear 5 provided in the embodiment of Figs. 1 and 2.

Through the conductor 60 the encoder registers in the processor 51 the number of actual feeding steps of the stepmotor 54 and thereby the relative position of the cutting wheel 8,28 and the specimen 16,21 in the feeding direction (the Y-direction) as counted from a reference position, so that one or more positions can be re-established.

The processor 51 is arranged to permit preselection of a tentative value of the feeding speed and a maximum permissible value of the feeding force. In the embodiments of Figs. 1,2 and 3,4, the selection of the maximum permissible value of the feeding force takes place by selection of a maximum permissible current value of the pulses supplied by the stepmotor driver 55 to the stepmotor 54. When such a selection has been entered, and the operator then enters a tentative value of the feeding speed, which is represented by the pulse frequency, the processor automatically starts a counting of the actual feeding steps registered by the encoder during a predetermined time interval and on this basis calculates the actual value of the feeding speed. Both the tentative and the actual feeding speed are shown in the display, and if the actual feeding speed is less than the tentative, the operator can enter a new selection of the feeding speed and can in this manner make an approach to an optimum value, as previously mentioned.

It is, however, also possible to automatize the adjustment of an optimum value of the feeding speed at a given value of the feeding force, viz. by arranging the processor 51 to adjust the number of revolutions of the stepmotor and thereby the feeding speed in dependence on the preselected maximum permissible value of the feeding force.

An important element of the invention is the above mentioned intermittent cutting, where the processor is so arranged as to be capable of commanding the stepmotor alternately to stop and execute one or more feeding steps, or alternately to execute one or more reverse steps and a greater number of feeding steps. Hereby it is obtained that the feeding movement of the cutting wheel is either stopped or reversed, whereafter the ensuing feeding motion will produce a momentaneously higher pressure in the cutting area, and the above mentioned effect is achieved. The stepmotor as a feeding means offers special facilities for an efficient intermittent cutting, because both stepwise feeding, stop and stepwise reverse movement can be better controlled than with other types of motors.

The second stepmotor 76 in the embodiment of Figs. 3 and 4 serves to displace the specimen 21 a preselected number of steps relative to the cutting wheel 28 in a direction perpendicular to the cutting wheel (the X-direction) from one cutting position to a next one. The selected number of steps, as e.g. expressed in mm, is entered into the processor 51 by the operator, whereby the stepmotor driver 79 is activated to transmit the required number of pulses to the stepmotor 76 and then to stop it. Each step can e.g. amount to 0.005 mm. Thereby it becomes possible to cut off samples of a preselected height in the X-direction with very high precision.

Before cutting off the first sample from a specimen, the operator may perform an idle run in which the free end of the specimen 21 is moved past the cutting wheel 28 without touching it. The idle run can be observed through a window in the cabinet of the apparatus. When the contour of the specimen is on the point of reaching the contour of the cutting wheel, the operator may by actuating a command store the Y-position registered by the encoder 27 in a memory of the processor 51 as a starting position for subsequent cutting operations, and when the contour of the specimen has just left the contour of the cutting wheel, the operator may similarly by actuating a command store the Y-position in the memory as an end position for the cutting operations. The processor may be so arranged that simultaneously with the storage of the end position it returns the specimen to the starting position.

After the idle run the operator may first upon entering a number of X-steps perform a clean cutting operation, and thereafter, as above described, a cutting of one or more samples having the preselected height in the X-direction, each time starting in the stored starting position and ending in the stored end position.

Before each withdrawal in the Y-direction from the end position to the starting position the specimen may be automatically retracted a few steps in the X-direction, so that it will not interfere with the cutting wheel.

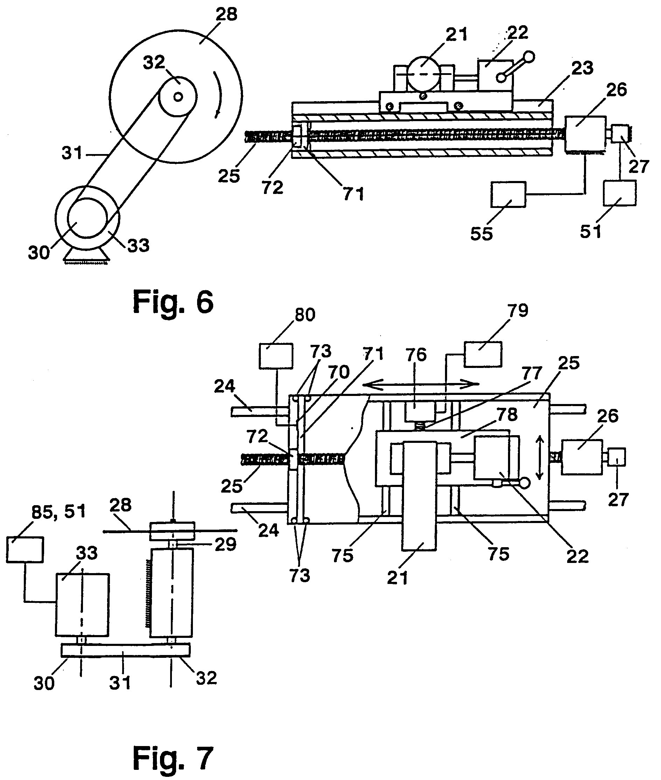

The embodiment of Figs. 6 and 7 differs from that of Figs. 3 and 4 in that the helical spindle 25 engages a nut 72 which is slidably mounted in the table 23. Attached to the nut 72 is a resilient bridge 71, the ends of which are engaged between fixed stops 73 in the interior of the table 23. The bridge is provided with a strain gauge 70 which is influenced by the bending of the bridge 71 and thereby produces a voltage which is a direct measure of the force at which the specimen 21 is fed towards the cutting wheel 28.

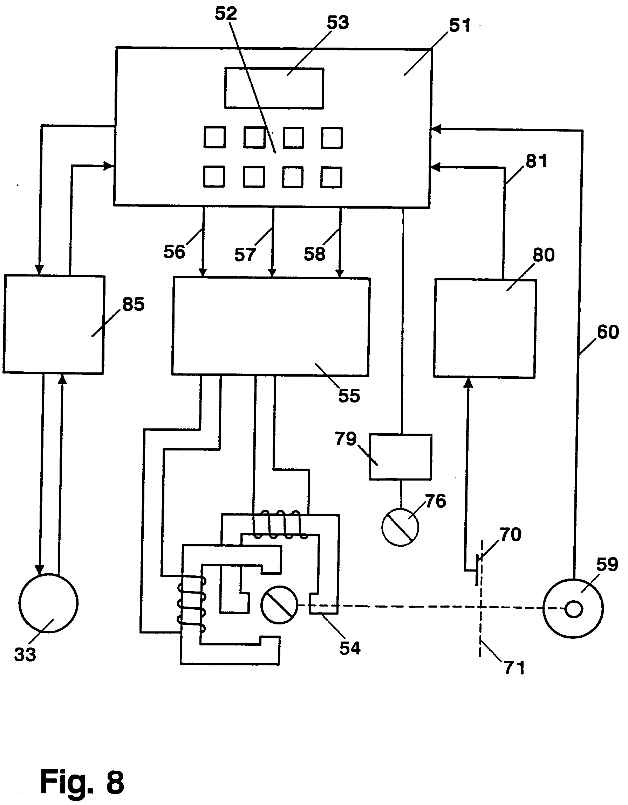

The diagram of Fig. 8 for the embodiment of Figs. 6 and 7 corresponds largely to that of Fig. 5. It shows, however, that the strain gauge 70 is connected to the processor 51 through an analog-digital converter 80 and an input conductor 81. In the processor the feeding force measured by the strain gauge is compared with a preselected maximum permissible value of the feeding force as expressed in force units. The processor is thereby caused to send an order to the stepmotor driver to change the current value of the pulses to the stepmotor 54 until the return signal from the strain gauge shows that the directly measured value of the feeding force is lower than the preselected value, but as closely up to this as possible. When the current value of the pulses has been established in this manner, the apparatus functions in the same way as that of Figs. 3 and 4. This also applies to the displacement of the specimen in the X-direction by means of the stepmotor 76, and the feeding and reverse movement in the Y-direction between the starting position and the end position of a cutting operation by means of the stepmotor 26.

The embodiment of Figs. 6 and 7 has the advantage over that of Figs. 3 and 4 that it is possible to work at a feeding force very close to the maximum value which the specimen and the cutting disc can withstand without suffering injury, and at a correspondingly high value of the feeding speed.

In the embodiment of Figs. 3 and 4, where the maximum permissible value of the feeding force is represented by a preselected current value of the pulses, it must on the other hand be taken into account that, owing to uncertainty of the specifications of the stepmotor and possible variations of transmission losses from the stepmotor to the area of engagement between the cutting wheel and the specimen, the feeding force produced by a given current value is subject to a considerable uncertainty, so that, to obtain safety against exceeding the maximum permissible actual feeding force, it is necessary to select a maximum permissible current value considerably lower than the value that would apply under optimum conditions.

Since it cannot be taken for granted that the cutting wheel 28 will always function at its optimum, because it may be worn down or damaged, situations may occur where the cutting wheel at a given speed of rotation produces substantially more frictional heat than a cutting wheel in good standing, whereby a risk of superheating of the cutting area arises. A similar situation may occur if the operator has selected a wrong cutting wheel.

To alleviate this risk, Fig. 8 illustrates that a power meter 85 is inserted in a supply circuit for the cutting motor, controlled by the processor 51, the power meter in turn sending a measure signal back to the processor 51. In this manner it becomes possible to control the power of the cutting motor 33 in accordance with predetermined values stored in the processor 51 and, if desired, upon exceeding a maximum permissible value of the power, to stop the cutting operation and produce a visual and/or acoustic error signal.

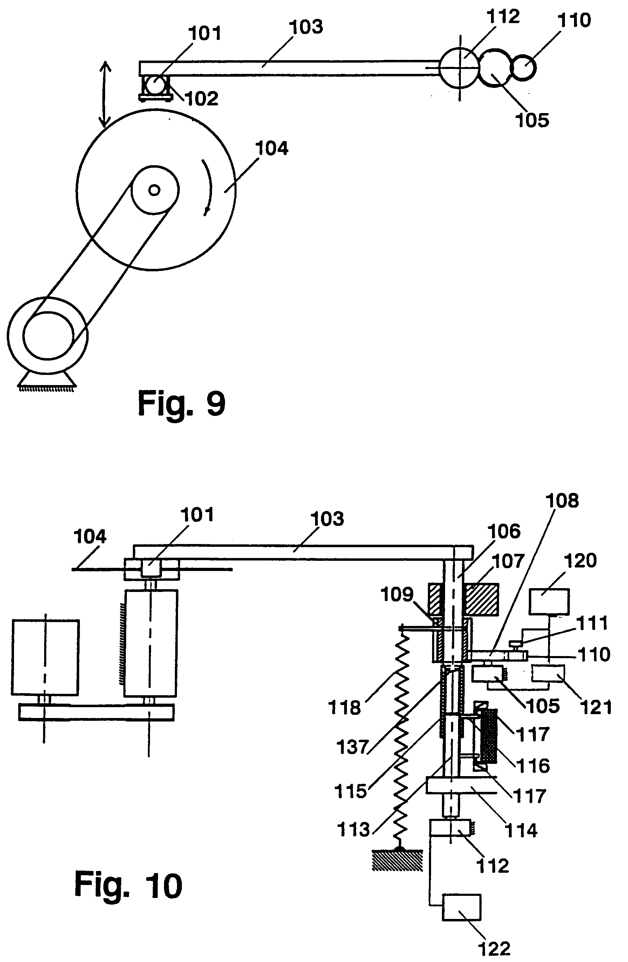

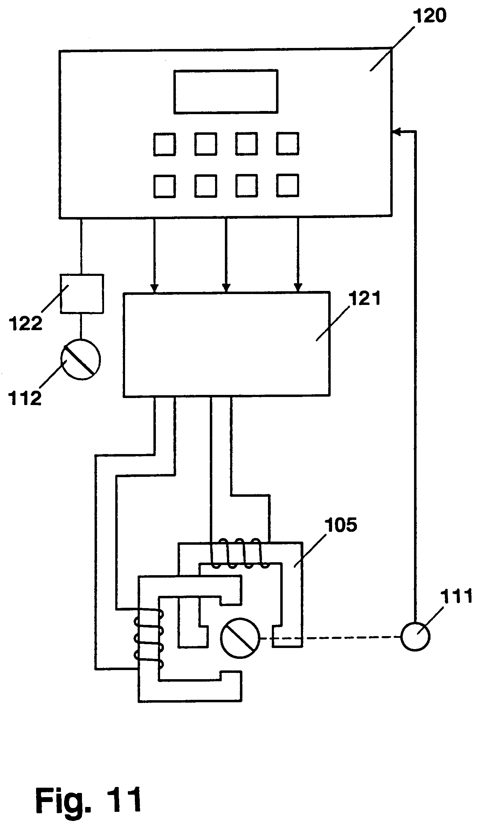

In the embodiment illustrated in Figs. 9-11, a specimen 101 is clamped to an arm 103 by means of clamping bolts 102. The arm 103 is adapted to be swung in a direction towards and away from a fixedly mounted cutting wheel 104. The arm 103 is attached to a shaft 106, which is rotatably and displaceably mounted in a stationary bearing 107. The shaft 106 carries a gear wheel 109 meshing with a gear wheel 108 mounted on the shaft of a first stepmotor 105 to which current pulses are supplied from an associated stepmotor driver 121. This is controlled from an electronic data processor 120 in exactly the same manner as the stepmotor driver 55 and the processor 51 in the embodiment of Figs. 3, 4 and 5.

The gear wheel 108 also meshes with a gear wheel 110, to which a potentiometer 111 is connected. The latter has a stationary output contact, which is connected to the processor and thereby enters a voltage value representing the angle of rotation of the arm 103 from a reference position, and thereby the position of the arm in the Y-direction.

For moving the arm 103 in the X-direction, i.e. perpendicularly to the cutting wheel 104, a second stepmotor 112 is provided, the associated stepmotor driver 122 of which is controlled by the processor 120. A helical spindle 113 connected to the stepmotor engages a nut 115. This carries a pin 116 which extends into a rectilinear guide 136 and thereby prevents the nut 115 from rotating. At the stepwise rotation of the stepmotor 112 in one direction and the other the nut 115 is thereby displaced axially forth and back. At each end of the guide a microswitch 117 is arranged. These form end stops for the axial movement of the nut 115 by interrupting the current supply to the stepmotor 112.

The shaft 106 rests against the front end of the nut 115 through matching spherical surfaces 137, one of which is convex, and the other concave. The shaft 106 is kept in contact with the nut 115 by a spring 118, so that it follows the nut when this is retracted.

Owing to the spherical contact surfaces 137 between the nut 115 and the shaft 106, the two bearings 107 and 114 need not necessarily be precisely co-axial, whereby the construction of the apparatus is simplified. Also in other respects the constructional arrangement of the apparatus is simplified.

Similarly as in the embodiment of Figs. 3 and 4, the operator may, by means of the stepmotors 105 and 112, begin by performing an idle run in which the starting and end positions in the Y-direction for a cutting operation are determined by observation and are stored in the processor 120 on the basis of the voltage value from the potentiometer, which here takes over the function of the encoder 59, whereafter the stepmotor 112 is used for displacement of the arm 113 in the X-direction and thereby for the cutting of one or more samples within the limits determined by the end stops formed by the microswitches 117.

In this embodiment the maximum permissible feeding force is determined by entering a maximum permissible current value of the pulses supplied by the stepmotor driver 121 to the stepmotor 105.

In all the embodiments described the specimen, instead of being clamped in a fixed vice or the like, may in a manner known per se be clamped in a holder imparting to it a rotary or oscillating movement parallel to the cutting wheel, as the cutting operation proceeds. This will contribute towards gentle treatment of the specimen and the cutting wheel, because the cutting position is constantly moved. Besides it becomes possible to cut samples with a larger cross-sectional dimension relative to the diameter of the cutting wheel.

## Claims

1. Apparatus for cutting off materialographic samples from a specimen (16,21,101), comprising an abrasive cutting wheel (8,28,104) driven by a cutting motor (12,33), and feeding means for advancing the cutting wheel relative to the specimen or vice versa, characterized in that the feeding means for advancing the cutting wheel in a direction (Y-direction) parallel to said wheel comprise a stepmotor (6,26,54,105) to which current pulses are supplied from an associated stepmotor driver (55,121).

2. Apparatus as in claim 1, characterized in that it comprises an electronic data processor (51,120) for adjusting, co-ordinating and displaying the parameters of the abrasive cutting operation.

3. Apparatus as in claim 2, characterized in that the processor (51,120) is arranged to permit preselection of a tentative value of the feeding speed and a maximum permissible value of the feeding force.

4. Apparatus as in claim 3, characterized in that the preselected maximum permissible value of the feeding force is represented by a preselected maximum permissible current value of the pulses supplied by the stepmotor driver (55,121) to the stepmotor (6,26,54,105).

5. Apparatus as in claim 3, characterized in that it comprises a strain gauge (70) for directly measuring the feeding force and a connection (80,81) for entering the measured value into the processor (51) for comparison with a preselected maximum permissible value of the feeding force as expressed in force units.

6. Apparatus as in any of claims 3-5, characterized in that it comprises an encoder (7,27,59) coupled to the stepmotor (6,26,54) and provided with an electric connection (60) to the processor (51) for registering therein the number of actual feeding steps of the stepmotor (6,26,54) and thereby the relative position of the cutting wheel (8,28) and the specimen (16,21) in the feeding direction (the Y-direction) as counted from a reference position.

7. Apparatus as in claim 6, characterized in that the processor (51) is so arranged that, when a tentative value of the feeding speed is entered, it starts a calculation of the actual feeding speed based on the number of actual feeding steps registered by the encoder (7,27,59) during a predetermined time interval.

8. Apparatus as in claim 7, characterized in that the processor (51,120) is arranged to adjust the number of revolutions of the stepmotor (6,26,54,105) and thereby the feeding speed in dependence on the preselected maximum permissible value of the feeding force.

9. Apparatus as in any of claims 2-8, characterized in that the processor (51,120) is so arranged as to be capable of commanding the stepmotor (6,26,54,105) alternately to stop and execute one or more feeding steps, or alternately to execute one or more reverse steps and a greater number of feeding steps.

10. Apparatus as in any of claims 2-9, characterized in that it comprises means (85) for measuring the instantaneous value of the power of the cutting motor (33) and a connection for entering the measured value into the processor (51) for comparison with preselected values of the power of the cutting motor (33).

11. Apparatus as in claim 2, characterized in that the processor (51,120) is arranged to execute a programmed adjustment of the torque, the number of revolutions per time unit, and the direction of rotation of the stepmotor (6,26,54,105) during the progress of the cutting operation.

12. Apparatus as in claim 11, characterized in that the processor (51,120) comprises a memory for storing a plurality of programs for different materials, including identification of a suitable abrasive cutting wheel.

13. Apparatus according to any of claims 2-12, characterized in that it comprises a second stepmotor (76,112) for displacing the specimen (21,101) and the cutting wheel (28,104) a preselected number of steps relative to one another prependicularly to the cutting wheel (28,104) (the X-direction) from one cutting position to a next one.

14. Apparatus as in claim 13, characterized in that the specimen (101) is clamped to an arm (103), which is fixed to a shaft (106), which is rotatably and axially displaceably mounted in a fixed bearing (107) and is adapted to be rotated by means of a first stepmotor (105) in the Y-direction for swinging the arm (103) towards and away from a fixedly mounted cutting wheel (104), and to be displaced in the X-direction, i.e. perpendicularly to the cutting wheel (104) by means of a second stepmotor (112).

## Patentansprüche

1. Vorrichtung zum Abschneiden von Materialproben von einem Probenkörper (16, 21, 101), umfassend ein von einem Schneidmotor (12, 33) angetriebenes abrasives Schneidrad (8, 28, 104) und Zustellmittel zum zustellen des Schneidrades relativ zu dem Probenkörper oder umgekehrt, dadurch **gekennzeichnet**, daß die Zustellmittel zum Zustellen des Schneidrades in einer zu den Rad parallelen Richtung (Y-Richtung) einen Schrittmotor (6, 26, 54, 105) umfassen, dem Stromimpulse von einem zugeordneten Schrittmotortreiber (55, 121) zugeführt werden.

2. Vorrichtung nach Anspruch 1, dadurch **gekennzeichnet**, daß sie einen elektronischen Datenprozessor (51, 120) zum Einstellen, Koordinieren und Anzeigen der Parameter des abrasiven Schneidvorgangs umfaßt.

3. Vorrichtung nach Anspruch 2, dadurch **gekennzeichnet**, daß der Prozessor (51, 120) so ausgebildet ist, daß er eine Vorwahl eines Versuchswertes der Zustellgeschwindigkeit und eines zulässigen Maximalwertes der Zustellkraft ermöglicht.

4. Vorrichtung nach Anspruch 3, dadurch **gekennzeichnet**, daß der vorgewählte zulässige Maximalwert der Zustellkraft durch eine vorgewählte zulässige maximale Stromstärke der Impulse repräsentiert wird, die dem Schrittmotor (6, 26, 54, 105) von dem Schrittmotortreiber (55, 121) zugeführt werden.

5. Vorrichtung nach Anspruch 3, dadurch **gekennzeichnet**, daß sie einen Dehnungsmesser (70) zum unmittelbaren Messen der Zustellkraft und eine Verbindung (80, 81) umfaßt, um den gemessenen Wert in den Prozessor (51) einzuspeisen zum Vergleich mit einem vorgewählten zulässigen Maximalwert der Zustellkraft in Krafteinheiten ausgedrückt

6. Vorrichtung nach einem der Ansprüche 3 bis 5, dadurch **gekennzeichnet**, daß sie ein Kodiergerät (7, 27, 59) umfaßt, das mit dem Schrittmotor (6, 26, 54) gekuppelt und mit einer elektrischen Verbindung (60) zu dem Prozessor (51) versehen ist, um darin die Anzahl der wirklichen Zustellschritte des Schrittmotors (6, 26, 54) und damit die Relativstellung des Schneidrades (8, 28) und des Probenkörpers (16, 21) in der Zustellrichtung (der Y-Richtung) von einer Bezugsposition aus gezählt zu registrieren.

7. Vorrichtung nach Anspruch 6, dadurch **gekennzeichnet**, daß der Prozessor (51) so ausgebildet ist, daß er nach Eingabe eines Versuchswertes der Zustellgeschwindigkeit aufgrund der Anzahl der von dem Kodiergerät (7, 27, 59) während eines bestimmten Zeitintervalls registrierten Anzahl der wirklichen Zustellschritte eine Berechnung der wirklichen Zustellgeschwindigkeit beginnt.

8. Vorrichtung nach Anspruch 7, dadurch **gekennzeichnet**, daß der Prozessor (51, 120) so ausgebildet ist, um die Anzahl der Umdrehungen des Schrittmotors (6, 26, 54, 105) und damit die Zustellgeschwindigkeit in Anhängigkeit von dem vorgewählten zulässigen Maximalwert der Zustellkraft einzustellen.

9. Vorrichtung nach einem der Ansprüche 2 bis 8, dadurch **gekennzeichnet**, daß der Prozessor (51, 120) so ausgebildet ist, daß er den Schrittmotor (6, 26, 54, 105) steuern kann, um wahlweise anzuhalten und einen oder mehrere Zustellschritte auszuführen oder um wahlweise einen oder mehrere Rückwärtsschritte und eine größere Anzahl von Zustellschritten auszuführen.

10. Vorrichtung nach einem der Ansprüche 2 bis 9, dadurch **gekennzeichnet**, daß sie Mittel (85) umfaßt, um den Istwert der Leistung des Schneidmotors (33) zu messen, und eine Verbindung zur Eingabe des Meßwertes in den Prozessor (51) zum Vergleich mit den vorgewählten Werten der Leistung des Schneidmotors (33) umfaßt.

11. Vorrichtung nach Anspruch 2, dadurch **gekennzeichnet**, daß der Prozessor (51, 120) so ausgebildet ist, um eine programmierte Einstellung des Drehmoments, der Anzahl der Umdrehungen pro Zeiteinheit und der Drehrichtung des Schrittmotor (6, 26, 54, 105) während des Ablaufs des Schneidvorgang auszuführen.

12. Vorrichtung nach Anspruch 11, dadurch **gekennzeichnet**, daß der Prozessor (51, 120) einen Speicher umfaßt, um eine Vielzahl von Programmen für unterschiedliche Materialien einschließlich der Bestimmung eines geeigneten abrasiven Schneidrades zu speichern.

13. Vorrichtung nach einem der Ansprüche 2 bis 12, dadurch **gekennzeichnet**, daß sie einen zweiten Schrittmotor (76, 112) zum Verlagern des Probenkörpers (21, 101) und des Schneidrades (28, 104) um eine bestimmte Anzahl von Schritten relativ zueinander rechtwinklig zu dem Schneidrad (28, 104) (die X-Richtung) von einer Schneidposition zu einer anderen umfaßt.

14. Vorrichtung nach Anspruch 13, dadurch **gekennzeichnet**, daß der Probenkörper (101) an einem Arm (103) eingespannt ist, der auf einer Welle (106) befestigt ist, die in einem festen Lager (107) drehbar und axial verschiebbar gelagert und von einem ersten Schrittmotor (105) in der Y-Richtung verdrehbar ist, um den Arm (103) zu einem ortsfesten Schneidrad (104) hin und von diesem weg zu verschwenken, und die von einem zweiten Schrittmotor (112) in der X-Richtung, das heißt rechtwinklig zu dem Schneidrad (104) verlagerbar ist.

## Revendications

1. Appareil pour couper des échantillons matérialographiques à partir d'un spécimen (16, 21, 101), comprenant une roue de coupe abrasive (8, 28, 104) entraînée par un moteur de coupe (12, 33), et des moyens d'avance de la roue de coupe par rapport au spécimen, ou vice versa, caractérisé en ce que les moyens d'avance de la roue de coupe dans une direction (direction Y) parallèle à ladite roue comprennent un moteur pas à pas (6, 26, 54, 105) auquel des impulsions de courant sont fournies à partir d'un circuit d'attaque (55, 121) associé de moteur pas à pas.

2. Appareil selon la revendication 1, caractérisé en ce qu'il comprend un processeur de données électroniques (51, 120) pour régler, coordonner et afficher les paramètres de l'opération de coupe abrasive.

3. Appareil selon la revendication 2, caractérisé en ce que le processeur (51, 120) est conçu pour permettre une présélection d'une valeur provisoire de la vitesse d'avance et d'une valeur maximale permise de la force d'avance.

4. Appareil selon la revendication 3, caractérisé en ce que la valeur maximale permise présélectionnée de la force d'avance est représentée par une valeur de courant maximale permise présélectionnée des impulsions fournies par le circuit d'attaque (55, 121) de moteur pas à pas au moteur pas à pas (6, 26, 54, 105).

5. Appareil selon la revendication 3, caractérisé en ce qu'il comprend une jauge de contrainte (70) pour mesurer directement la force d'avance et une liaison (80, 81) pour introduire la valeur mesurée dans le processeur (51) en vue d'une comparaison avec une valeur maximale permise présélectionnée de la force d'avance lorsqu'elle est exprimée en unités de force.

6. Appareil selon l'une quelconque des revendications 3 à 5, caractérisé en ce qu'il comprend un codeur (7, 27, 59) couplé au moteur pas à pas (6, 26, 54) et pourvu d'une liaison électrique (60) avec le processeur (51) pour y enregistrer le nombre de pas d'avance réels du moteur pas à pas (6, 26, 54) et, ainsi, la position relative de la roue de coupe (8, 28) et du spécimen (16, 21) dans la direction d'avance (la direction Y) lorsqu'elle est comptée à partir d'une position de référence.

7. Appareil selon la revendication 6, caractérisé en ce que le processeur (51) est conçu de manière à ce que, quand une valeur provisoire de la vitesse d'avance est introduite, il commence un calcul de la vitesse d'avance réelle en fonction du nombre de pas d'avance réels enregistré par le codeur (7, 27, 59) durant un intervalle de temps prédéterminé.

8. Appareil selon la revendication 7, caractérisé en ce que le processeur (51, 120) est conçu pour régler le nombre de tours du moteur pas à pas (6, 26, 54, 105) et, ainsi, la vitesse d'avance en fonction de la valeur maximale permise présélectionnée de la force d'avance.

9. Appareil selon l'une quelconque des revendications 2 à 8, caractérisé en ce que le processeur (51, 120) est conçu de manière à être capable de donner des ordres au moteur pas à pas (6, 26, 54, 105) pour, alternativement, arrêter et exécuter un ou plusieurs pas d'avance ou pour, alternativement, exécuter un ou plusieurs pas inverses et un nombre plus grand de pas d'avance.

10. Appareil selon l'une quelconque des revendications 2 à 9, caractérisé en ce qu'il comprend des moyens (85) pour mesurer la valeur instantanée de la puissance du moteur de coupe (33) et une liaison pour introduire la valeur mesurée dans le processeur (51) en vue d'une comparaison avec les valeurs présélectionnées de la puissance du moteur de coupe (33).

11. Appareil selon la revendication 2, caractérisé en ce que le processeur (51, 120) est conçu pour exécuter un réglage programmé du couple, du nombre de tours par unité de temps, et de la direction de rotation du moteur pas à pas (6, 26, 54, 105) durant le déroulement de l'opération de coupe.

12. Appareil selon la revendication 11, caractérisé en ce que le processeur (51, 120) comprend une mémoire pour stocker une pluralité de programmes destinés à différents matériaux, comprenant une identification d'une roue de coupe abrasive appropriée.

13. Appareil selon l'une quelconque des revendications 2 à 12, caractérisé en ce qu'il comprend un second moteur pas à pas (76, 112) pour déplacer le spécimen (21, 101) et la roue de coupe (28, 104) d'un nombre présélectionné de pas l'un par rapport à l'autre, perpendiculairement à la roue de coupe (28, 104) (la direction X), d'une position de coupe à la suivante.

14. Appareil selon la revendication 13, caractérisé en ce que le spécimen (101) est sur un bras (103) fixé à un arbre (106), qui est monté en rotation et de façon à être mobile axialement dans un palier fixe (107) et qui est apte à être mis en rotation à l'aide d'un premier moteur pas à pas (105) dans la direction Y pour faire osciller le bras (103) en direction et à l'opposé d'une roue de coupe (104) montée fixement, et à être déplacé dans la direction X, c'est-à-dire perpendiculairement à la roue de coupe (104) à l'aide d'un second moteur pas a pas (112).
